# EUROPÄISCHE PATENTANMELDUNG

(11) **EP 4 574 715 A1**
(43) Veröffentlichungstag der Anmeldung: **25.06.2025**
(21) Anmeldenummer: 24217915.8
(22) Anmeldetag: 05.12.2024
(51) Int. Cl.: B65G 1/137, B66F 9/06

(54) **MOBILER KOMMISSIONIERROBOTER**

(30) Priorität: 21.12.2023 DE 102023136357; 17.04.2024 DE 102024110719
(71) Anmelder: Linde Material Handling GmbH, 63743 Aschaffenburg (DE)
(72) Erfinder: Bodin, Lucien, 86100 CHÂTELLERAULT (FR)
(74) Vertreter: Patentship Patentanwaltgesellschaft

(57) **Zusammenfassung**

Die Erfindung betrifft einen mobilen Kommissionierroboter (1) zum vollautomatischen Kommissionieren von Objekten (2) in einem Lager umfassend ein Fahrwerk zum Abstützen und Verfahren des mobilen Kommissionierroboters (1) auf einer Fahrbahn (FB), eine Lastaufnahmevorrichtung (5) zur Aufnahme mindestens einer Lasttragvorrichtung (6), insbesondere einer Palette (ZP), und einen Lasthandhabungsmanipulator (10). Der mobile Kommissionierroboter (1) weist einen Fahrzeugrahmen (15) auf, an dem in einem Frontbereich ein Antriebsrad (16), insbesondere ein lenkbares Antriebsrad, angeordnet ist und an dem in einem Heckbereich zwei in Fahrzeugquerrichtung (Q) voneinander beabstandet angeordnete Lasträder (17a, 17b) als Fahrwerk angeordnet sind, wobei an dem Fahrzeugrahmen (15) im Heckbereich die Lastaufnahmevorrichtung (5) anhebbar und absenkbar angeordnet ist, wobei die Lastaufnahmevorrichtung (5) freitragend angeordnet ist.

## Beschreibung

Die Erfindung betrifft einen mobilen Kommissionierroboter zum vollautomatischen Kommissionieren von Objekten in einem Lager umfassend ein Fahrwerk zum Abstützen und Verfahren des mobilen Kommissionierroboters auf einer Fahrbahn, eine Lastaufnahmevorrichtung zur Aufnahme mindestens einer Lasttragvorrichtung, insbesondere einer Palette, und einen Lasthandhabungsmanipulator.

Mobile Kommissionierroboter werden zum vollautomatischen Kommissionieren von Objekten, beispielsweise Waren, verwendet, wobei die Objekte mit dem Lasthandhabungsmanipulator von einem seitlich neben dem Kommissionierroboter befindlichen Quellort, beispielsweise einer Quellpalette, entnommen und auf eine am Kommissionierroboter an der Lastaufnahmevorrichtung mitgeführte Lasttragvorrichtung, beispielsweise eine Zielpalette bildende Palette, abgelegt werden. Der Quellort kann ein Regalfach eines seitlich neben dem Kommissionierroboter befindlichen Regals eines Lagers oder auch eine seitlich neben dem Kommissionierroboter befindliche Palette eines Lagers sein.

Es ist bekannt, mobile Kommissionierroboter auf der Basis eines autonom und somit fahrerlos betriebenen Flurförderzeugs auszubilden, indem das Flurförderzeug für die Handhabung der Objekte mit einem Lasthandhabungsmanipulator versehen wird. Mit dem Lasthandhabungsmanipulator kann ein außerhalb der Grundfläche des Flurförderzeugs an einem seitlich neben dem Flurförderzeug befindlichen Quellort befindliches Objekt aufgenommen und auf der Lasttragvorrichtung des Flurförderzeugs abgelegt werden.

Bei der vollautomatischen Kommissionierung von Objekten von einer Quellpalette auf eine an dem Kommissionierroboter mitgeführten Zielpalette sind eine Reihe von Kundenanforderungen zu beachten. Insbesondere soll der mobile Kommissionierroboter wendig sein und einen kleinen Wendekreis aufweisen, um diesen in engen Regalgassen zwischen zwei Regalgassen einsetzen zu können. Insbesondere sollen Objekte von einer untersten Packebene einer auf der Fahrbahn abgestellten Quellpalette mit dem Lasthandhabungsmanipulator aufgenommen werden können und bei einem kurzen Kommissionerweg mit dem Lasthandhabungsmanipulator auf der auf dem Kommissionierroboter mitgeführten Zielpalette abgelegt werden können, um eine hohe Kommissierleistung bei einer hohen Flexibilität zu ermöglichen. Zudem sollen auch kleinvolumige Objekte mit dem Lasthandhabungsmanipulator als unterste Ebene auf der Zielpalette abgelegt werden können, um eine hohe Flexibilität des Packmusters der zu kommissionierenden Zielpalette zu ermöglichen. Die unterste Packebene einer auf der Fahrbahn abgestellten Quellpalette stellt diejenige Packebene dar, bei der die Objekte direkt auf der Oberseite der Quellpalette abgestellt sind. Entsprechend stellt die unterste Ebene der an dem Kommissionierroboter mitgeführten Zielpalette diejenige Ebene dar, bei der die Objekte direkt auf der Oberseite der Zielpalette abgestellt werden.

Der vorliegenden Erfindung liegt die Aufgabe zugrunde, einen mobilen Kommissionierroboter zur Verfügung zu stellen, der hinsichtlich der Kundenanforderungen verbessert ist.

Diese Aufgabe wird erfindungsgemäß dadurch gelöst, dass der mobile Kommissionierroboter einen Fahrzeugrahmen aufweist, an dem in einem Frontbereich ein Antriebsrad, insbesondere ein lenkbares Antriebsrad, angeordnet ist und an dem in einem Heckbereich zwei in Fahrzeugquerrichtung voneinander beabstandet angeordnete Lasträder als Fahrwerk angeordnet sind, wobei an dem Fahrzeugrahmen im Heckbereich die Lastaufnahmevorrichtung anhebbar und absenkbar angeordnet ist, wobei die Lastaufnahmevorrichtung freitragend angeordnet ist.

Der erfindungsgemäße mobile Kommissionierroboter weist ein Fahrwerk auf, das aus einem lenkbaren Antriebsrad im Frontbereich und zwei Lasträder im Heckbereich gebildet ist, die in Fahrzeugquerrichtung voneinander beabstandet angeordnete sind. Im Heckbereich des erfindungsgemäßen mobilen Kommissionierroboters ist die Lastaufnahmevorrichtung anhebbar und absenkbar angeordnet, mit der eine Lasttragvorrichtung, die bevorzugt als Zielpalette ausgebildet ist, auf dem mobilen Kommissionierroboter mitgeführt wird. Die Lastaufnahmevorrichtung ist freitragend angeordnet, d.h. außerhalb der Radbasis, die von dem Antriebsrad und den Lasträdern gebildet ist, angeordnet. Hierdurch wird bei dem erfindungsgemäßen mobilen Kommissionierroboter ein kurzer Radstand zwischen dem Antriebsrad und den Lasträdern ermöglicht, der eine hohe Wendigkeit und einen kleinen Wendekreis des mobilen Kommissionierroboters ermöglicht. Bei dem erfindungsgemäßen mobilen Kommissionierroboter wird zudem ermöglicht, den Fahrzeugrahmen zwischen der Fahrzeugfront und dem Fahrzeugheck niedrig bauend auszuführen, d.h. mit einer geringen Bauhöhe über der Fahrbahn, so dass mit dem Lasthandhabungsmanipulator in einfacher Weise auch kleinvolumige Waren von der untersten Ebene einer Quellpalette entnommen und auf die unterste Ebene der mitgeführten Zielpalette abgelegt werden können.

Gemäß einer vorteilhaften Ausgestaltungsform der Erfindung ist an dem Fahrzeugrahmen im Heckbereich ein Hubmast angeordnet, an dem die Lastaufnahmevorrichtung anhebbar und absenkbar angeordnet ist. Hierdurch kann in einfacher Weise die freitragend angeordnete Lastaufnahmevorrichtung an dem Fahrzeugrahmen anhebbar und absenkbar angeordnet werden.

Gemäß einer vorteilhaften Ausgestaltungsform der Erfindung ist die Lastaufnahmevorrichtung als Lastgabel mit zwei in Fahrzeuglängsrichtung angeordneten Gabelzinken ausgebildet und weist der Hubmast mindestens eine am Fahrzeugheck in vertikaler Richtung angeordnetes Führungsprofil auf, an dem die Lastgabel anhebbar und absenkbar angeordnet ist. Mit einer derartigen als Lastgabel mit in Fahrzeuglängsrichtung angeordneten Gabelzinken ausgebildeten Lastaufnahmevorrichtung kann mit dem Kommissionierroboter in einfacher Weise eine leere Zielpalette von der Fahrbahn aufgenommen und eine fertig kommissionierte Zielpalette auf der Fahrbahn abgesetzt werden und die Zielpalette während des Kommissionierbetriebs mit dem mobilen Kommissionierroboter im angehobenen Zustand mittransportiert werden.

Gemäß einer vorteilhaften Ausgestaltungsform der Erfindung weist der Hubmast zwei in Fahrzeugquerrichtung voneinander beabstandet angeordnete Standmastprofile auf, an denen die Lastgabel mittels Führungsrollen geführt ist. Mit einem derartigen von Standmastprofilen ausgebildeten Hubmast, in dem die Lastgabel mittels Führungsrollen geführt ist, kann bei geringem Bauaufwand eine stabile, hohe Lasten tragende Konstruktion erzielt werden.

Gemäß einer vorteilhaften Ausgestaltungsform der Erfindung ist an dem Fahrzeugrahmen ein Batteriefach ausgebildet, in dem eine Energieversorgungseinheit angeordnet ist, wobei in Fahrzeuglängsrichtung zwischen dem Batteriefach und den Lasträdern an dem Fahrzeugrahmen der Lasthandhabungsmanipulator angeordnet ist. Bei dem erfindungsgemäßen Kommissionierroboter kann der Fahrzeugrahmen zwischen dem Batteriefach und dem Hubmast niedrig bauend ausgeführt werden, d.h. mit einer geringen Bauhöhe über der Fahrbahn, so dass mit einer Anordnung des Lasthandhabungsmanipulators zwischen dem Batteriefach und den Lasträdern in einfacher Weise erzielt werden kann, dass mit dem Lasthandhabungsmanipulator kleinvolumige Waren von der untersten Ebene einer Quellpalette entnommen werden können.

Gemäß einer vorteilhaften Ausgestaltungsform der Erfindung umfasst der Lasthandhabungsmanipulator eine vertikal angeordnete Hubsäule, an der ein Roboterarm anhebbar und absenkbar angeordnet ist. Bevorzugt ist der Roboterarm mit einer Scara-Kinematik versehen, die mehrere über vertikale Drehachsen gekoppelte übereinander angeordnete Armelemente aufweist. Der Roboteram ist an der Hubsäule in vertikaler Richtung anhebbar und absenkbar angeordnet. Hierdurch kann in einem Scara-Roboterarm ein großer Aktionsbereich abgedeckt werden und Objekte von neben dem Kommissionierroboter stehenden Quellpaletten entnommen werden.

Gemäß einer vorteilhaften Ausgestaltungsform der Erfindung umfasst der Fahrzeugrahmen zwischen dem Batteriefach und dem Hubmast zwei in Fahrzeugquerrichtung voneinander beabstandet angeordnete, als Längsträger ausgebildete Radarme, an denen jeweils ein Lastrad angeordnet ist. Mit einer derartigen Ausführung des Fahrzeugrahmens, der zwischen dem Batteriefach und dem Hubmast zwei in Fahrzeugquerrichtung voneinander beabstandet angeordnete, als Längsträger ausgebildete Radarme umfasst, kann in einfacher Weise der Fahrzeugrahmen zwischen dem Batteriefach und dem Hubmast niedrig bauend ausgeführt werden.

Gemäß einer vorteilhaften Ausgestaltungsform der Erfindung ist der Bereich in vertikaler Richtung oberhalb der als Längsträger ausgebildeten Radarme als Arbeitsraum des Roboterarms ausgebildet.

Gemäß einer vorteilhaften Ausgestaltungsform der Erfindung ist der Fahrzeugrahmen im Frontbereich mit einem Fahrantrieb und einem Lenkantrieb für das Antriebsrad versehen. Der Frontbereich des mobilen Kommissionierroboters, der mit dem Antriebsrad, dem Fahrantrieb und dem Lenkantrieb sowie mit dem Batteriefach versehen ist, stellt somit einen Antriebsteil des Kommissionierroboters dar, in dem mit dem Antriebsrad, dem Fahrantrieb und dem Lenkantrieb alle zum freien Verfahren des mobilen Kommissionierroboters erforderlichen Komponenten zusammengefasst sind.

Gemäß einer vorteilhaften Ausgestaltungsform der Erfindung ist der Fahrzeugrahmen im Frontbereich mit einer Robotiksteuerung versehen, die einen autonomen oder automatisierten Betrieb des mobilen Kommissionierroboters ermöglicht. Die Robotiksteuerung stellt somit eine Robotersteuerung für den autonomen bzw. automatisierten Betrieb des mobilen Kommissionierroboters dar.

Gemäß einer vorteilhaften Ausgestaltungsform der Erfindung ist in Fahrzeuglängsrichtung zwischen dem Batteriefach und den Lasträdern an dem Fahrzeugrahmen eine Abstützeinrichtung mit seitlich in Fahrzeugquerrichtung ausfahrbaren Abstützmitteln angeordnet. Mit einer derartigen Abstützeinrichtung kann in einfacher Weise die seitliche Radbasis verbreitert werden, um die Stabilität des mobilen Kommissionierroboters zu erhöhen, wenn mit dem Lasthandhabungsmanipulator schwere Objekte von einer Quellpalette aufgenommen werden und/oder mit dem Lasthandhabungsmanipulator mit einer hohen seitlichen Ausladung ein Objekt von einer Quellpalette aufgenommen werden soll.

Gemäß einer vorteilhaften Ausgestaltungsform der Erfindung ist zum Anheben und Absenken der Lastaufnahmevorrichtung ein Hubantrieb vorgesehen, der mindestens einen in Fahrzeuglängsrichtung liegend angeordneten Linearaktuator, insbesondere einen elektrischen Linearaktuator, aufweist. Eine liegende Anordnung, d.h. eine horizontale Anordnung eines Linearaktuators in Fahrzeuglängsrichtung ermöglicht es, die Bauhöhe des Hubmastes gering zu halten, so dass kurze Kommissionerwege erzielt werden, wenn mit dem Lasthandhabungsmanipulator Objekte von einer untersten Packebene einer auf der Fahrbahn abgestellten Quellpalette aufgenommen und auf der auf dem Kommissionierroboter mitgeführten Zielpalette abgelegt werden sollen.

Gemäß einer vorteilhaften Ausgestaltungsform der Erfindung ist der Linearaktuator in Fahrzeuglängsrichtung zwischen dem Batteriefach und dem Hubmast angeordnet. Hierdurch kann eine bauraumsparende Anordnung des Linearaktuators zwischen dem Batteriefach und dem Hubmast erzielt werden ohne die Bauhöhe des Fahrzeugsrahmens zu erhöhen.

Gemäß einer vorteilhaften Ausgestaltungsform der Erfindung ist der mobile Kommissionierroboter im Frontbereich mit zwei in Fahrzeugquerrichtung beabstandet angeordneten Umfeldsensoren versehen ist.

Gemäß einer vorteilhaften Ausgestaltungsform der Erfindung ist der mobile Kommissionierroboter im Heckbereich mit einem in Fahrzeugquerrichtung mittig angeordneten Umfeldsensor oder mit zwei in Fahrzeugquerrichtung beabstandet angeordneten Umfeldsensoren versehen ist.

Mit derartig am mobilen Kommissionierroboter angeordneten Umfeldsensoren, beispielsweise Laserscannern oder Kameras, kann in einfacher Weise das Umfeld des Kommissionierroboters erfasst und überwacht werden, um den Betrieb des mobilen Kommissioninierroboters abzusichern.

Der erfindungsgemäße mobile Kommissionierroboter weist eine Reihe von Vorteilen auf.

Der erfindungsgemäße Kommissionierroboter bietet die Möglichkeit, eine Kommissionierung von Objekten von einer Quellpalette auf eine Zielpalette mit nur einem einzigen Fahrzeug vollständig autonom zu realisieren. Der erfindungsgemäße Kommissionierroboter kann sich autonom bewegen, mittels der Lastaufnahmevorrichtung eine Zielpalette aufnehmen, und einen Kommissionierauftrag, bei dem unterschiedliche Objekte von verschiedenen Quellpaletten auf die am Kommissionierroboter mitgeführte Zielpalette gemäß einem gewünschen Packmuster abgelegt werden, autonom abarbeiten.

Der erfindungsgemäße Kommissionierroboter weist einen großen Arbeitsraum für den Lasthandhabungsmanipulatior auf, wodurch der Roboterarm mit geringen Beschränkungen alle erforderlichen Bewegungen ausführen kann, um ein Objekt von einer Quellpalette, beispielsweise von der untersten Ebene einer Quellpalette, zu entnehmen.

Bei dem erfindungsgemäßen Kommissionierroboter ist die Lastaufnahmevorrichtung freitragend und somit außerhalb der Radbasis des Fahrwerks angeordnet. Hierdruch wird ein kurzer Radstand des erfindungsgemäßen Kommissionierroboters in Fahrzeuglängsrichtung ermöglicht, der zu einer hohen Wendigkeit des Kommissionierroboters führt.

Darüber hinaus lässt sich der erfindungsgemäße mobile Kommissionierroboter in einfacher Weise in einen bestehenden Logistikbereich, beispielsweise einer Lagerhalle, einsetzen, da der erfindungsgemäße mobile Kommissionierroboter vergleichbare Außenabmessungen und eine vergleichbare Wendigkeit wie handelsübliche manuell bedienbare Lagertechnikflurförderzeuge, beispielsweise Hubwagen oder Kommissionierer, aufweist.

Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen mobilen Kommissionierroboter in einer perspektivischen Darstellung,
- Figur 2: den mobilen Kommissionierroboter der Figur 1 in einer weiteren perspektivischen Darstellung,
- Figur 3: den mobilen Kommissionierroboter der Figuren 1 und 2 in einer Explosionsdarstellung,
- Figur 4: den mobilen Kommissionierroboter in einer vergrößerten Darstellung,
- Figur 5: Darstellungen des mobilen Kommissionierroboters in einer Frontansicht mit eingefahrener und ausgefahrener Abstützeinrichtung,
- Figur 6: den mobilen Kommissionierroboter der Figuren 1 bis 5 seitlich neben einer Quellpalette und
- Figur 7: den mobilen Kommissionierroboter der Figuren 1 bis 6 in einer schematischen Seitenansicht.

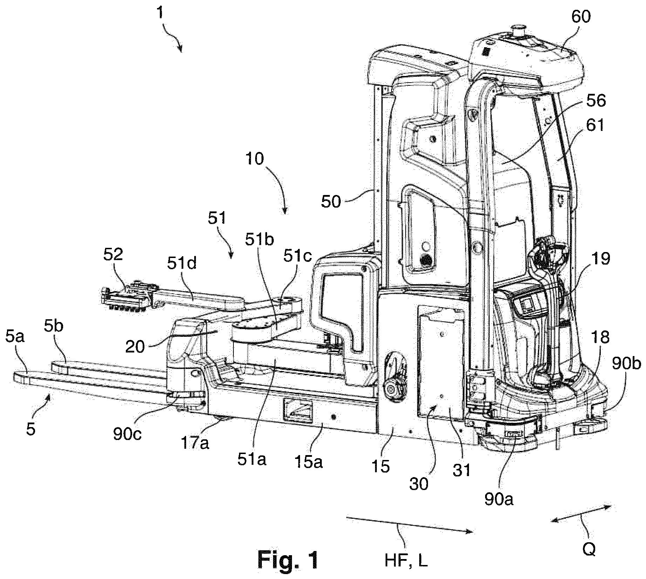

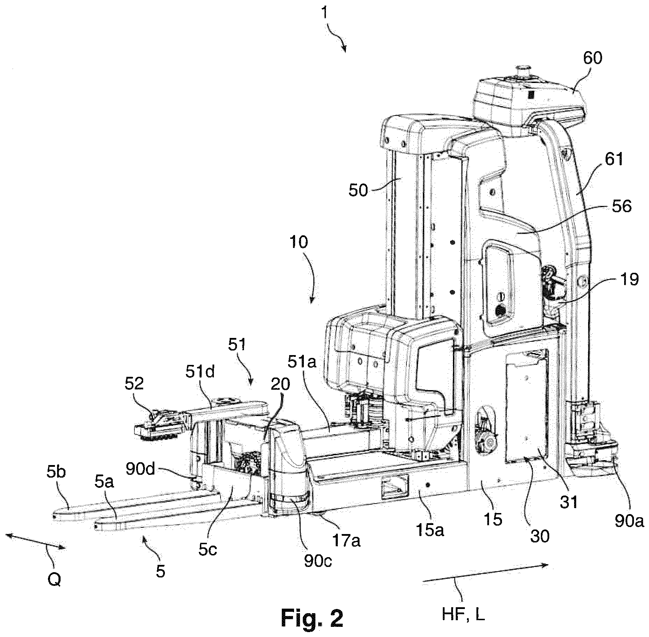

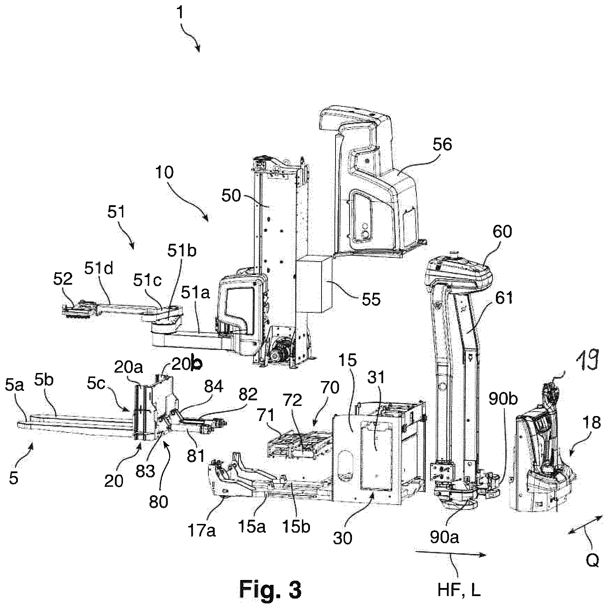

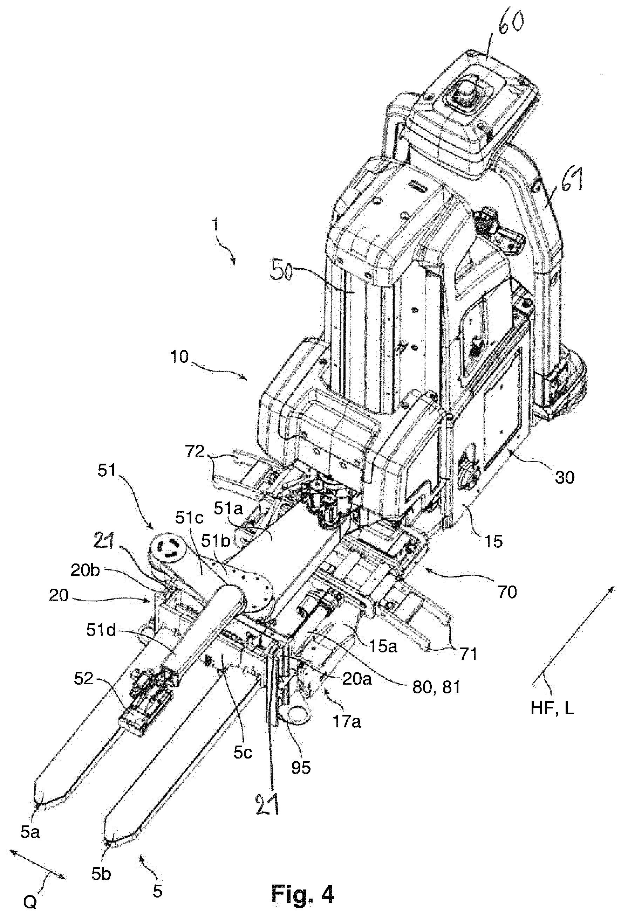

In den Figuren 1 bis 7 ist ein mobiler Kommissionierroboter 1 zum vollautomatischen Kommissionieren von Objekten 2 in einem Lager dargestellt.

Die im folgenden verwendeten Angaben Frontbereich, Heckbereich, vorne, hinten, links, rechts beziehen sich auf eine in der Figur 1 dargestellte Haupftfahrtrichtung HF des mobilen Kommissionierroboters 1.

Der mobiler Kommissionierroboter 1 umfasst ein Fahrwerk, mit dem der Kommissionierroboter 1 auf einer Fahrbahn FB abgestützt ist und auf der Fahrbahn FB frei verfahrbar ist.

Der mobiler Kommissionierroboter 1 umfasst weiter eine Lastaufnahmevorrichtung 5, mit der eine Lasttragvorrichtung 6, beispielsweise eine eine Zielpalette ZP bildende Palette 7, aufgenommen werden kann. Der mobiler Kommissionierroboter 1 umfasst einen Lasthanhandungmanipulator 10, mit dem im Kommissionierbetrieb des mobilen Kommissionierroboters 1 Objekte 2 von einer seitlich neben dem mobilen Kommissionierroboter 1 stehenden, eine Quellpalette QP bildenden Palette 8 aufgenommen und auf der an der Lastaufnahmevorrichtung 5 befindlichen Zielpalette ZP abgelegt werden können.

Der mobile Kommissionierroboter 1 weist einen Fahrzeugrahmen 15 auf, an dem in einem Frontbereich ein Antriebsrad 16, insbesondere ein lenkbares Antriebsrad, angeordnet ist und an dem in einem Heckbereich zwei in Fahrzeugqerrichtung Q voneinander beabstandet angeordnete Lasträder 17a, 17b als Fahrwerk angeordnet sind.

An dem Fahrzeugrahmen 15 ist im Frontbereich ein Fahrantrieb, beispielsweise ein elektrischer Fahrantrieb, und ein Lenkantrieb, beispielsweise ein elektrischer Lenkantrieb, für das Antriebsrad 16 angeordnet. Der Fahrantrieb, der Lenkantrieb und das Antriebsrad 16 sind bevorzugt an einem Antriebsteil 18 angeordnet, das an dem Fahrzeugrahmen 15 im Frontbereich angeordnet bzw. ausgebildet ist. An dem Antriebsteil 18 kann für einen manuellen Betrieb des Kommissionierroboters 1 eine Lenkdeichsel 19 vorgesehen sein. Das Antriebsteil 18 ist bevorzugt baugleich mit dem Antriebsteil eines manuell bedienbaren Hubwagens.

An dem Fahrzeugrahmen 15 ist im Heckbereich die Lastaufnahmevorrichtung 5 anhebbar und absenkbar angeordnet. Die Lastaufnahmevorrichtung 6 ist - in Fahrzeuglängsrichtung L gesehen - außerhalb der Radbasis RB, d.h. dem Abstand in Fahrzeuglängsrichtung L zwischen dem Antriebsrad 16 und der Achse der Lasträder 17a, 17b, angeordnet und somit freitragend angeordnet.

An dem Fahrzeugrahmen 15 ist im Heckbereich ein Hubmast 20 angeordnet, an dem die Lastaufnahmevorrichtung 5 anhebbar und absenkbar angeordnet ist.

Im dargestellten Ausführungsbeispiel ist die Lastaufnahmevorrichtung 5 als Lastgabel mit zwei in Fahrzeuglängsrichtung L angeordneten Gabelzinken 5a, 5b ausgebildet, die an einem Gabelrücken 5c angeordnet sind. Der Hubmast 20 weist im dargestellten Ausführungsbeispiel zwei am Fahrzeugheck in vertikaler Richtung angeordnete, als feststehende Standmastprofile ausgebildete Führungsprofile 20a, 20b auf, die in Fahrzeugquerrichtung Q voneinander beabstandet sind und in denen die Lastgabel mit an dem Gabelrücken 5c der Lastgabel angeordneten Führungsrollen 21 anhebbar und absenkbar angeordnet ist.

An dem Fahrzeugrahmen 15 ist ein Batteriefach 30 ausgebildet, in dem eine Energieversorgungseinheit 31 angeordnet ist. Die Energieversorgungseinheit 31 kann beispielweise als Traktionsbatterie oder als Brennstoffzellensystem ausgebildet sein.

Das Batteriefach 30 ist im Frontbereich des Kommissionierroboters 1 benachbart zu dem Antriebsrad 16 angeordnet. In Fahrzeuglängsrichtung L zwischen dem Batteriefach 30 und den Lasträdern 17a, 17b bzw. dem am Fahrzeugheck angeordneten Hubmast 20 ist an dem Fahrzeugrahmen 15 der Lasthandhabungsmanipulator 10 angeordnet.

Der Lasthandhabungsmanipulator 10 umfasst im dargestellten Ausführungsbeispiel eine vertikal angeordnete Hubsäule 50, an der ein Roboterarm 51 anhebbar und absenkbar angeordnet ist. Der Roboterarm 51 ist im dargestellten Ausführungsbeispiel als Scara-Roboterarm ausgebildet, der mehrere, in vertikaler Richtung übereinander angeordnete Armelemente 51a, 51b, 51c, 51d aufweist, die mittels vertikaler Drehachse miteinander gekoppelt sind. Das unterste Armelement 51a ist an der Hubsäule 50 anhebbar und absenkbar angeordnet. Das oberste Armelement 51d ist mit einem Aufnahmewerkzeug 52, beispielsweise einem Sauggreifer oder einem Aufwälzgreifer oder einem Adhäsionsgreifer, versehen, mit dem die Objekte 2 aufgenommen werden können.

An der Vorderseite der Hubsäule 50 sind im dargestellten Ausführungsbeispiel in vertikaler Richtung über dem Batteriefach 30 Steuerungs- und/oder Antriebskomponenten 55 des Lasthandhabungsmanipulators 10 angeordnet. Zur Abdeckung der Steuerungs- und/oder Antriebskomponenten 55 kann eine Abdeckhaube 56, beispielsweise eine Kunststoffhaube, vorgesehen sein, innerhalb der die Steuerungs- und/oder Antriebskomponenten 55 geschützt angeordnet sind.

Der Fahrzeugrahmen 15 ist zwischen dem Batteriefach 30 und somit zwischen der Hubsäule 50 und dem Hubmast 20 von zwei in Fahrzeugquerrichtung Q voneinander beabstandet angeordneten, als Längsträgern ausgebildeten Radarmen 15a, 15b gebildet, an deren heckseitigen Endbereich jeweils ein Lastrad 17a, 17b angeordnet ist.

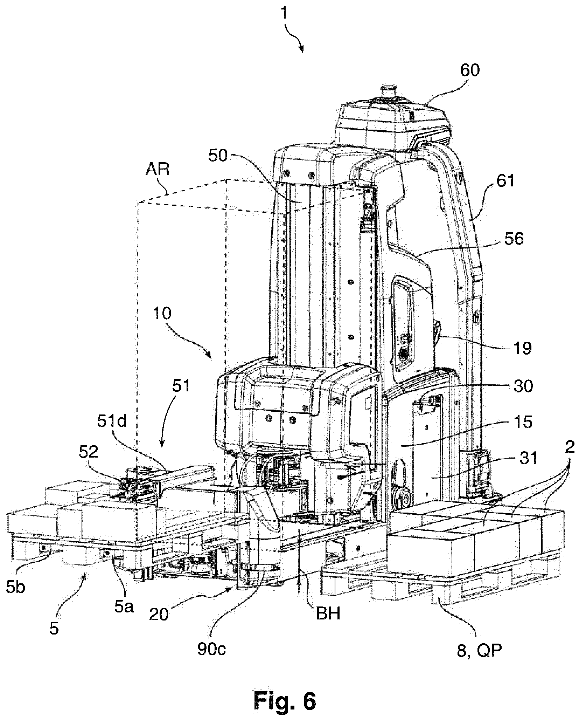

Der Bereich in vertikaler Richtung oberhalb der als Längsträger ausgebildeten Radarme 15a, 15b ist als Arbeitsraum AR des Roboterarms 51 ausgebildet. Der Arbeitsraum AR ist in der Figur 6 zur Veranschaulichung als Quader mit strichlierten Kantenlinien dargestellt.

Im Frontbereich ist der Fahrzeugrahmen 15 mit einer Robotiksteuerung 60 versehen, die einen autonomen oder automatisierten Betrieb des mobilen Kommissionierroboters 1 mitsamt des Lasthandhabungsmanipulators 10 ermöglicht. Hierzu kann an dem Antriebsteil 18 ein bügelartiger Träger 61 angeordnet sein, an dem die für den autonomen oder automatisierten Betrieb des mobilen Kommissionierroboters 1 und des Lasthandhabungsmanipulators 10 erforderlichen Sensoren und elektrischen bzw. elektronischen Steuerungskomponenten angeordnet sind.

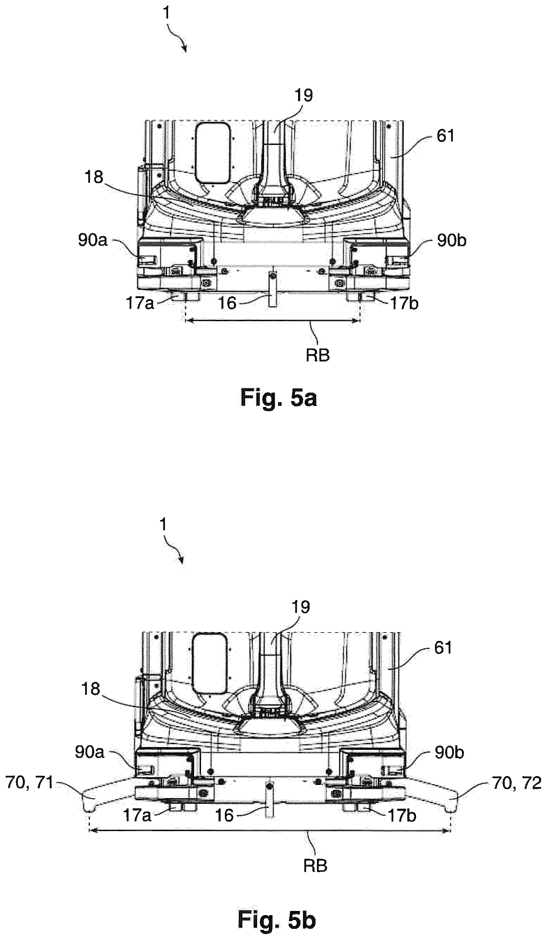

In Fahrzeuglängsrichtung L zwischen dem Batteriefach 30 und den Lasträdern 17a, 17b ist im dargestellten Ausführungsbeispiel an dem Fahrzeugrahmen 15 eine Abstützeinrichtung 70 angeordnet. Die Abstützeinrichtung 70 weist zwei in Fahrzeugquerrichtung Q und somit seitlich ausfahrbare Abstützmittel 71, 72, beispielsweise Abstützfüße, auf, mit denen sich in einem ausgefahrenen Zustand der Kommissionierroboter 1 zusätzlich auf der Fahrbahn FB abstützen kann. In der Figur 5 sind in der oberen Darstellung die Abstützmittel 71, 72 in einer seitlich eingefahrenen und angehobenen Stellung dargestellt, wobei die seitliche Radbasis RB des Kommissionierroboters von den Aufstandspunkten der beiden Lasträder 17a, 17b auf der Fahrbahn FB gebildet ist. In der Figur 5 sind in der unteren Darstellung die Abstützmittel 71, 72 in einer seitlich ausgefahrenen und auf die Fahrbahn abgesenkten Stellung dargestellt, wobei die seitliche Radbasis RB des Kommissionierroboters 1 von den Aufstandspunkten der beiden Abstützmittel 71, 72 auf der Fahrbahn FB gebildet ist. In der seitlich ausgefahrenen und auf die Fahrbahn FB abgesenkten Stellung kann die seitliche Radbasis RB vergrößert werden, um die Stablität des Kommissionierroboters 1 im Kommissionierbetrieb zu erhöhen, insbesondere in einem Betriebszustand, in dem mit dem Lasthandhabungsmanipulator 10 ein schweres Objekt 2 von der Quellpalette QP aufgenommen wird. Die Abstützmittel 71, 72 sind mittels nicht näher dargestellter Aktuatoren, beispielsweise elektrischer oder hydraulischer Aktuatoren, zwischen der eingefahrenen Stellung und der ausgefahrenen Stellung betätigbar.

Die Abstützmittel 71, 72 sind im dargestellten Ausführungsbeispiel in Fahrzeuglängsrichtung L angrenzend an die Hubsäule 50 des Lasthandhabungsmanipulator 10 angeordnet und auf die Oberseite der als Längsträger ausgebildete Radarme 15a, 15b aufgesetzt.

Zum Anheben und Absenken der Lastaufnahmevorrichtung 5 an dem Hubmast 20 ist ein Hubantrieb 80 vorgesehen, der mindestens einen in Fahrzeuglängsrichtung L liegend und somit horizontal angeordneten Linearaktuator 81, 82 aufweist. Im dargestellten Ausführungsbeispiel sind zwei in Fahrzeugquerrichtung Q voneinander beabstandet angeordnete Linearaktuatoren 81, 82 vorgesehen. Die Linearaktuatoren 81, 82 sind bevorzugt jeweils als elektrischer Linearaktuator oder als Hydraulikzylinder ausgebildet. Die Linearaktuatoren 81, 82 sind im dargestellten Ausführungsbeispiel in Fahrzeuglängsrichtung L angrenzend an die Abstützmittel 71, 72 im Bereich der als Längsträger ausgebildete Radarme 15a, 15b angeordnet. Die Linearaktatoren 81, 82 betätigen jeweils eine Hebelkinematik 83, 84, die die Längsbewegung des entsprechenden Linearaktuators 81, 82 in eine vertikale Hubbeweung der Lastgabel im Hubmast 20 umwandelt.

Zur Absicherung des Umfelds des mobilen Kommissionierroboters 1 ist der mobile Kommissionierroboter 1 im Frontbereich mit zwei in Fahrzeugquerrichtung Q beabstandet angeordneten Umfeldsensoren 90a, 90b versehen. Die Umfeldsensoren 90a, 90b sind im dargestellten Ausführungsbeispiel an dem bügelartigen Träger 61 in dessen unteren Bereich im vorderen linken Eckbereich und im vorderen rechten Eckbereich des Kommissionierroboters 1 angeordnet.

Zur Absicherung des Umfelds des mobiler Kommissionierroboters 1 kann der mobile Kommissionierroboter 1 im Heckbereich mit einem in Fahrzeugquerrichtung Q mittig angeordneten Umfeldsensor oder alternativ mit zwei in Fahrzeugquerrichtung Q seitlich beabstandet angeordneten Umfeldsensoren 90c, 90d versehen sein. Im dargestellten Ausführungsbeispiel ist der Hubmast 20 mit entsprechenden Befestigungsflanschen 95 versehen, an denen entweder der eine mittig angeordnete Umfeldsensor oder die beiden Umfeldsensoren 90c, 90d angeordnet werden können. Der Umfeldsensor 90c ist im dargestellten Ausführungsbeispiel im hinteren linken Eckbereich und der Umfeldsensor 90d im hinteren rechten Eckbereich des Kommissionierroboters 1 an dem Hubmast 20 angeordnet.

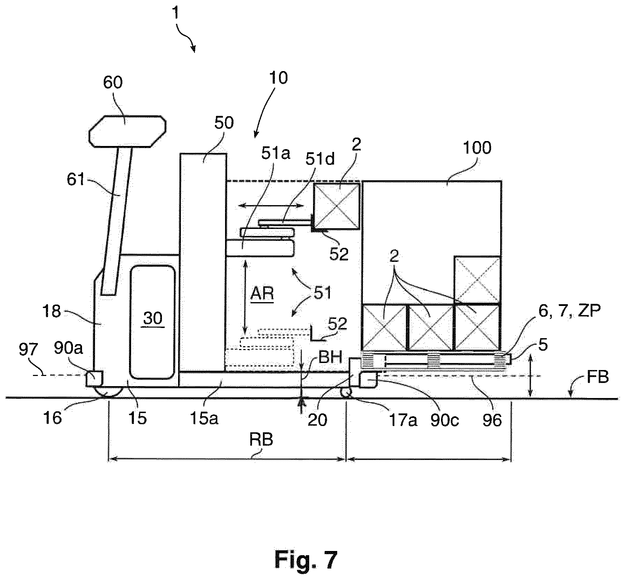

Bei dem erfindungsgemäßen Kommissionierroboter 1 ist somit in Fahrzeuglängsrichtung L gesehen - wie in der Figur 7 ersichtlich ist - im Frontbereich das die Fahrzeugfront bildende Antriebsteil 18 mit dem Antriebsrad 16 und mit dem Träger 61 und der Robotiksteuerung 60 an dem Fahrzeugrahmen 15 angeordnet. Angrenzend an das Antriebsteil 18 ist an dem Fahrzeugrahmen 15 das Batteriefach 30 angeordnet. Angrenzend an das Batteriefach 30 ist an dem Fahrzeugrahmen 15 der Lasthandhabungsmanipulator 10 mit der Hubsäule 50 und dem Roboterarm 51 angeordnet. Angrenzend an die Hubsäule 50 ist an dem Fahrzeugrahmen 15 die gegebenenfalls vorgesehene Abstützeinrichtung 70 angeordnet. Angrenzend an die Hubsäule 50 bzw. die gegebenenfalls vorgesehene Abstützeinrichtung 70 sind die Linearaktuatoren 81, 82 des Hubantriebs 80 angeordnet. Am Fahrzeugheck sind an dem Fahrzeugrahmen 15 die Lasträder 17a, 17b und der Hubmast 20 angeordnet, an dem die freitragende und somit auskragende Lastaufnahmevorrichtung 5 angeordnet ist. Die Hubsäule 50 mit dem Roboterarm 51 des Lasthandhabungsmanipulators 10 ist somit an dem Fahrzeugrahmen 15 - in Fahrzeuglängsrichtung L gesehen - zwischen dem Batteriefach 30 und dem Hubmast 20 angeordnet.

Durch die Ausbildung des Fahrzeugrahmens 15 zwischen dem Batteriefach 30 bzw. der Hubsäule 50 und dem Hubmast 20 von den beiden als Längsträgern ausgebildeten Radarmen 15a, 15b kann der Fahrzeugrahmen 15 im Bereich der Radarme 15a, 15b und somit unterhalb des Arbeitsraums AR des Roboterarms 51 mit einer geringen Bauhöhe BH von beispielsweise maximal 25 cm über dem Fahrbahnniveau ausgebildet werden. Mit dem in dem Arbeitsraum AR, der in vertikaler Richtung oberhalb der als Längsträger ausgebildeten Radarme 15a, 15b ausgebildet ist, anhebbaren und absenkbaren Roboterarm 51 können somit in der abgesenkten Stellung auch kleinvolumige Objekte 2 von der untersten Packebene einer auf der Fahrbahn abgestellten Quellpalette QP aufgenommen werden.

Durch die liegende und somit horizontale Anordnung der Linearaktuatoren 81, 82 des Hubantriebs 80 der Lastgabel kann der Hubmast 20 mit einer geringen Bauhöhe von beispielsweise maximal 60 cm über dem Fahrbahnniveau ausgeführt werden. Bevorzugt weist der Hubmast 20 eine derartige Bauhöhe auf, dass einerseits in der vollständig abgesenkten Stellung des Roboterarms 51 das mit dem Aufnahmewerkzeug 52 versehene Armelement 51d des Roboterarms 51 über den Hubmast 20 nach hinten oberhalb der Lastaufnahmevorrichtung 5 verschwenkt werden kann, wie in den Figuren 1, 2, 4 und 6 dargestellt ist, und andererseits die Lastaufnahmevorrichtung 5 derart angehoben werden kann, dass die Umfeldsensoren 90c, 90d - wie in der Figur 7 verdeutlicht ist - bei vollständig angehobener Lastaufnahmevorrichtung 5 ein freies Sichtfeld unterhalb der auf der Lastaufnahmevorrichtung 5 befindlichen Zielpalette ZP haben. Das Sichtfeld der heckseitigen Umfeldsensoren 90c, 90d ist in der Figur 7 mit der Strichlinie 96 verdeutlicht. Das Sichtfeld der frontseitigen Umfeldsensoren 90a, 90b ist in der Figur 7 mit der Strichlinie 97 verdeutlicht.

Bei dem erfindungsgemäßen mobilen Kommissionierroboter 1 können somit in der vollständig abgesenkten Stellung des Roboterarms 51 Objekte 2 von der untersten Packebene einer auf der Fahrbahn abgestellten Quellpalette QP mit dem Roboterarm 51 aufgenommen und - ohne den Roboterarm 51 an der Hubsäule 50 anheben zu müssen - als unterste Ebene auf der auf der Lastaufnahmevorrichtung 5 befindlichen Zielpalette ZP abgelegt werden, wodurch kurze mit dem Roboterarm 51 auszuführende Kommissionierwege des Objekts 2 zwischen der Quellpalette QP und der Zielpalette ZP erzielt werden können und somit eine hohe Kommissionierleistung des Kommissionierroboters 1 erzielt werden kann.

Die unterste Packebene einer auf der Fahrbahn abgestellten Quellpalette QP stellt diejenige Packebene dar, bei der die Objekte 2 direkt auf der Oberseite der Quellpalette QP abgestellt sind. Entsprechend stellt die unterste Ebene der auf der Lastaufnahmevorrichtung 5 befindlichen Zielpalette ZP diejenige Ebene dar, bei der die Objekte 2 direkt auf der Oberseite der Zielpalette ZP abgestellt werden.

Durch Anheben des Roboterarms 51 an der Hubsäule 50 kann die auf der Lastaufnahmevorrichtung 5 befindlichen Zielpalette ZP mit Objekten 2 nach oben beladen werden. Die Figur 7 zeigt den Roboterarm 51 in der untersten abgesenkten Stellung und in einer nach oben angehobenen Stellung, wobei mit dem schematisch dargestellten Rechteck 100 eine maximal beladene Zielpalette ZP verdeutlicht ist, die mit dem Roboterarm 51 beladen werden kann.

Die Erfindung ist nicht auf das in den Figuren 1 bis 7 dargestellte Ausführungsbeispiel des Kommissionierroboters 1 mit der Abstützeinrichtung 70 beschränkt. Alternativ kann der Kommissionierroboters 1 ohne die Abstützeinrichtung 70 ausgeführt werden, wodurch gegebenenfalls die Länge der Radarme 15a, 15b und somit die Fahrzeuglänge des mobilen Kommissionierroboters 1 verringert werden kann.

## Patentansprüche

1. Mobiler Kommissionierroboter (1) zum vollautomatischen Kommissionieren von Objekten (2) in einem Lager umfassend ein Fahrwerk zum Abstützen und Verfahren des mobilen Kommissionierroboters (1) auf einer Fahrbahn (FB), eine Lastaufnahmevorrichtung (5) zur Aufnahme mindestens einer Lasttragvorrichtung (6), insbesondere einer Palette (ZP), und einen Lasthandhabungsmanipulator (10), **dadurch gekennzeichnet, dass** der mobile Kommissionierroboter (1) einen Fahrzeugrahmen (15) aufweist, an dem in einem Frontbereich ein Antriebsrad (16), insbesondere ein lenkbares Antriebsrad, angeordnet ist und an dem in einem Heckbereich zwei in Fahrzeugquerrichtung (Q) voneinander beabstandet angeordnete Lasträder (17a, 17b) als Fahrwerk angeordnet sind, wobei an dem Fahrzeugrahmen (15) im Heckbereich die Lastaufnahmevorrichtung (5) anhebbar und absenkbar angeordnet ist, wobei die Lastaufnahmevorrichtung (5) freitragend angeordnet ist.

2. Mobiler Kommissionierroboter nach Anspruch 1, **dadurch gekennzeichnet, dass** an dem Fahrzeugrahmen (15) im Heckbereich ein Hubmast (20) angeordnet ist, an dem die Lastaufnahmevorrichtung (5) anhebbar und absenkbar angeordnet ist.

3. Mobiler Kommissionierroboter nach Anspruch 2, **dadurch gekennzeichnet, dass** die Lastaufnahmevorrichtung (5) als Lastgabel mit zwei in Fahrzeuglängsrichtung angeordneten Gabelzinken (5a, 5b) ausgebildet ist und der Hubmast (20) mindestens eine am Fahrzeugheck in vertikaler Richtung angeordnetes Führungsprofil (20a; 20b) aufweist, an dem die Lastgabel anhebbar und absenkbar angeordnet ist.

4. Mobiler Kommissionierroboter nach Anspruch 3, **dadurch gekennzeichnet, dass** der Hubmast (20) zwei in Fahrzeugquerrichtung (Q) voneinander beabstandet angeordnete Standmastprofile (20a; 20b) aufweist, an denen die Lastgabel mittels Führungsrollen (21) geführt ist.

5. Mobiler Kommissionierroboter nach einem der Ansprüche 1 bis 4, **dadurch gekennzeichnet, dass** an dem Fahrzeugrahmen (15) ein Batteriefach (30) ausgebildet ist, in dem eine Energieversorgungseinheit angeordnet ist, wobei in Fahrzeuglängsrichtung (L) zwischen dem Batteriefach (30) und den Lasträdern (17a, 17b) an dem Fahrzeugrahmen (15) der Lasthandhabungsmanipulator (10) angeordnet ist.

6. Mobiler Kommissionierroboter nach einem der Ansprüche 1 bis 5, **dadurch gekennzeichnet, dass** der Lasthandhabungsmanipulator (10) eine vertikal angeordnete Hubsäule (50) umfasst, an der ein Roboterarm (51) anhebbar und absenkbar angeordnet ist.

7. Mobiler Kommissionierroboter nach einem der Ansprüche 2 bis 6, **dadurch gekennzeichnet, dass** der Fahrzeugrahmen (15) zwischen dem Batteriefach (30) und dem Hubmast (20) zwei in Fahrzeugquerrichtung (Q) voneinander beabstandet angeordnete, als Längsträger ausgebildete Radarme (15a, 15b) umfasst, an denen jeweils ein Lastrad (17a, 17b) angeordnet ist.

8. Mobiler Kommissionierroboter nach Anspruch 7, **dadurch gekennzeichnet, dass** der Bereich in vertikaler Richtung oberhalb der als Längsträger ausgebildeten Radarme (15a; 15b) als Arbeitsraum (AR) des Roboterarms (51) ausgebildet ist.

9. Mobiler Kommissionierroboter nach einem der Ansprüche 1 bis 8, **dadurch gekennzeichnet, dass** der Fahrzeugrahmen (15) im Frontbereich mit einem Fahrantrieb und einem Lenkantrieb für das Antriebsrad (16) versehen ist.

10. Mobiler Kommissionierroboter nach einem der Ansprüche 1 bis 9, **dadurch gekennzeichnet, dass** der Fahrzeugrahmen (15) im Frontbereich mit einer Robotiksteuerung (60) versehen ist, die einen autonomen oder automatisierten Betrieb des mobilen Kommissionierroboters (1) ermöglicht.

11. Mobiler Kommissionierroboter nach einem der Ansprüche 5 bis 10, **dadurch gekennzeichnet, dass** in Fahrzeuglängsrichtung (L) zwischen dem Batteriefach (30) und den Lasträdern (17a; 17b) an dem Fahrzeugrahmen (15) eine Abstützeinrichtung (70) mit seitlich in Fahrzeugquerrichtung (Q) ausfahrbaren Abstützmitteln (71, 72) angeordnet ist.

12. Mobiler Kommissionierroboter nach einem der Ansprüche 1 bis 11, **dadurch gekennzeichnet, dass** zum Anheben und Absenken der Lastaufnahmevorrichtung (5) ein Hubantrieb (80) vorgesehen ist, der mindestens einen in Fahrzeuglängsrichtung (L) liegend angeordneten Linearaktuator (81; 82), insbesondere einen elektrischen Linearaktuator, aufweist.

13. Mobiler Kommissionierroboter nach Anspruch 12, **dadurch gekennzeichnet, dass** der Linearaktuator (81; 82) in Fahrzeuglängsrichtung (L) zwischen dem Batteriefach (30) und dem Hubmast (20) angeordnet ist.

14. Mobiler Kommissionierroboter nach einem der Ansprüche 1 bis 13, **dadurch gekennzeichnet, dass** der mobile Kommissionierroboter (1) im Frontbereich mit zwei in Fahrzeugquerrichtung (Q) beabstandet angeordneten Umfeldsensoren (90a; 90b) versehen ist.

15. Mobiler Kommissionierroboter nach einem der Ansprüche 1 bis 14, **dadurch gekennzeichnet, dass** der mobile Kommissionierroboter (1) im Heckbereich mit einem in Fahrzeugquerrichtung (Q) mittig angeordneten Umfeldsensor oder mit zwei in Fahrzeugquerrichtung (Q) beabstandet angeordneten Umfeldsensoren (90c; 90d) versehen ist.
